# EUROPEAN PATENT APPLICATION

(11) **EP 2 594 136 A1**
(43) Date of publication of application: **22.05.2013**
(21) Application number: 11189355.8
(22) Date of filing: 16.11.2011
(51) Int. Cl.: A23B 4/005, A23B 4/01, A23B 4/06, A23L 1/317

(54) **Process for abating the microbiological charge of the outer surface of cased meat-based salumi products**

(71) Applicant: Biraghi S.p.A., 12030 Cavallermaggiore (Cuneo) (IT)
(72) Inventor: Bisotti, Stefano, 29100 Piacenza (IT); Fontana, Mauro, 10147 Torino (IT)
(74) Representative: Buzzi, Franco

(57) **Abstract**

A process of physical treatment for abating the microbiological charge of the outer surface of cased meat-based salumi products, whether entire or in portions, raw or cooked, consisting in subjecting the product to a cycle of thermal treatment including a step of rapid pre-cooling to a temperature comprised between approximately 0°C and 2°C, a step of rapid heating to a temperature comprised between approximately 72°C and 80°C, and to a step of final cooling to a temperature comprised between approximately 2°C and 4°C.

## Description

### Field of the invention

The present invention relates to a process of physical treatment for sanitation, i.e., for abating the microbiological charge, of the outer surface of cased meat-based salumi products, whether entire or in portions, raw or cooked.

### Background of the invention

The chemical, physical, and rheological characteristics of salumi products, whether entire or in portions, raw or cooked, render them a substrate particularly suited to the development of a large variety of micro-organisms, some species of which are potentially pathogenic for the end consumer. Among said micro-organisms, we recall in particular micro-organisms belonging to the genus *Salmonella spp.* and to the species *Listeria monocytogenes, Escherichia coli, Staphilococcus aureus.*

*Listeria monocytogenes* is a saprophytic micro-organism commonly present in nature and ubiquitous in the environment, having been isolated in the soil, in water, in vegetables, in waste water, and in the intestine and genital tract of healthy carriers.

It is considered, at the current state of scientific knowledge, responsible for severe sporadic infections in humans and animals. It is invasive given that it is able to traverse the placenta and penetrate the central nervous system (causing meningoencephalites). It is a facultative intracellular bacterium capable of surviving and growing in the majority of cells of the infected host.

Six species belong to the genus *Listeria: L. monocytogenes, L. ivenovii, L. innocua, L. welshimeri, L. seegligeri* and *L. grayi.* Even though both *L*. *ivenovii* and *L. monocytogenes* are pathogenic for mice, only *L. monocytogenes* is consistently associated to pathological conditions in humans.

*Listeria monocytogenes* is a short Gram-positive, non-capsulated, non-sporulating, facultatively anaerobic, catalase-positive bacillus, with the capacity for growing on the most common cultures within a vast temperature range. *L. monocytogenes* is motile at temperatures comprised between 18°C and 22°C with characteristic tumbling motility, but is without motility at 37°C; the dimensions are 1-4 µm / 0.5 µm, and observed under the microscope is in the form of short chains or small masses.

The disease caused by *Listeria monocytogenes,* referred to as "listeriosis", is a septicaemia of intestinal origin with the risk of causing foetoplacental infection and meningoencephalitis. The disease occurs in adults by contact with infected material (meat, milk-based products, materials contaminated with the faeces of infected animals) or by ingestion of contaminated food.

The infectious dose of *Listeria* is rather low: there suffice in fact 100 bacterial cells per gram of food to cause infection. The disease strikes above all weakened patients (immunodepressed subjects, patients suffering from liver diseases, the elderly) and women during pregnancy. After an incubation of 3-8 days, the disease manifests itself with fever (bacteriaemia), cephalea (meningoencephalic forms); other clinical manifestations are: internal and external localized abscesses, endocarditis, skin lesions, and granulomatose lesions of the liver and of other organs. Neonatal listeriosis can occur owing to transplacental passage of the micro-organism, in the cases of sepsis of the mother, or by colonization of the genital pathways and consequent infection of the foetus during delivery. Listeriosis in immunocompetent subjects is almost always limited to gastroenteric forms with nausea, vomiting, diarrhoea, and high temperature, a few hours after ingestion of the contaminated food, normally without neurological complications. The most active antibiotics appear to be ampicillin and gentamicin. Clinical failure does not necessarily indicate failure of the therapy since in many cases the therapy is started late precisely on account of the difficulty of formulating a correct diagnosis. Listeriosis can be positively diagnosed only with isolation of the micro-organism from the blood, from the cephalorachidian liquid, or from the faeces (even though the latter isolation is difficult and of limited diagnostic value). *L. monocytogenes* is an important pathogen also in veterinary medicine since it causes encephalitis, mastitis, and abortion in sheep and bovines and cases of infection contracted by the staff that handles infected animals (Cain, 1986).

*Listeria monocytogenes* is considered a micro-organism indicative of the wholesomeness of foodstuffs by the latest European norms regarding food hygiene (Reg. 1441/2007 CE).

*Escherichia coli* (usually abbreviated to *E*. *coli*) is the most widely known species of the genus *Escherichia*: within the species at least 171 serotypes are distinguished, characterized by different combinations of the antigens O, H, K, F. It is one of the principal species of bacteria that live in the lower part of the intestine of warm-blooded animals (birds and mammals, including humans), necessary for correct digestion of the food. Its presence in bodies of water indicates the presence of conditions of faecalization (it is the principal indicator of faecal contamination, together with enterococci). The name derives from its discoverer, Theodor Escherich. It belongs to the group of enterobacteria and is commonly used as model organism of bacteria in general.

The number of cells of *E. coli* in the faeces that a human expels in a day ranges from 100 billion (10¹¹) to 10 trillion (10¹⁹). The genus *Escherichia,* together with other genera (*Enterobacter, Klebsiella, Citrobacter, Serratia,* etc.) are grouped together under the name of coliforms. Technically the "group of coliforms" comprises non-sporulating aerobic and anaerobic bacteria.

Within the group of coliforms, *Escherichia coli* is widely represented and is in exclusive relationship with the gastrointestinal tract of humans and of warm-blooded animals, unlike the micro-organisms belonging to different genera, amongst which *Enterobacter, Klebsiella* and *Citrobacter,* which are characterized by a potential capacity of regrowth once they have reached the environment. The species *Escherichia coli* is a rod-shaped, Gram-negative, aerobic and facultatively anaerobic, non-sporulating micro-organism, which grows at the temperature of 44.5°C, is lactose-fermenting, is indole-positive in terrains containing tryptophan, and is beta-D-glucuronidase-positive. In the literature, the presence of this enzyme has been reported in 94-99.5% of biotypes of *Escherichia coli,* with the exception of the serotypes O157:H7.

In waters for human consumption, in waters of swimming pools, in bathing waters, but also in other types of matrices (e.g., foodstuffs, cosmetics) there is prescribed the mandatory absence of *Escherichia coli* on account of its role of primary indicator of faecal contamination. The lack of correspondence to the parametric value established constitutes a non-compliance of the product (water, food, etc.) In order to identify it in the environment there have been drawn up, in more recent years, analytical methods that are based upon the detection of the enzymatic activity of beta-D-glucuronidase, which can be detected by hydrolysis of beta-glucuronidres chromogens or fluorogens with release of coloured or fluorescent compounds. This specific characteristic, given that it frequently eliminates the need to carry out confirmation tests, enables results to be obtained in shorter times and makes it possible to arrive with greater accuracy at determination of the micro-organism sought.

Even though it represents a common inhabitant of the intestine and plays a fundamental role in the digestive process, there are situations in which E. *coli* can cause pathological conditions in humans and animals. Some strains of E. *coli* are the etiological agent of intestinal and extra-intestinal diseases, such as infections of the urinary tract, meningitis, peritonitis, septicaemia, and pneumonia.

Some strains of *E. coli* are toxicogenic; namely, they produce toxins that can be the cause of diarrhoea. Dysentry from *E. coli* is a common alimentary toxic infection, since it is contracted principally from contaminated food. Contamination can come from inadequately cooked infected meat, non-pasteurized milk and cheeses deriving therefrom, and other food contaminated by faeces. *E. coli* produces four types of toxins that may be divided, according to the different sensitivity to thermal treatment, into thermolabile and thermostable toxins, and according to the toxicogenic action (shiga toxins and haemolytic toxins, HlyA). Thermolabile toxin, referred to as LT, is very similar in structure and functions to the toxin of cholera. It contains a subunit 'A' and five subunits 'B' in a holotoxin. The subunits B contribute to adherence and penetration of the toxin into the intestinal cells of the host, where the subunit A stimulates the cells to release water, thus causing diarrhoea.

*Salmonellae* are Gram-negative, non-sporulating, facultatively anaerobic bacilli. They ferment glucose, producing gas (H₂S), reduce nitrates, and do not produce cytochrome-oxydase. The majority does not ferment lactose. Since they present peritrichous flagella, they are all motile, except *S. Gallinarum-Pullorum.*

The serotypes are diversified according to the somatic antigen "O", the flagellar antigen "H", and the surface antigen "Vi". According to the antigen "O", they are distinguished into serogroups A, B, C1, C2, D and *E. Salmonellae* are present in the environment and may be either commensal or pathogenic for human beings and for various animals. Some serotypes are exclusively present in humans (e.g., *S. typhi* and *S. paratyphi*), others adapt also to other animals (e.g., *S. typhimurium*)*.* In humans they are the cause of two infectious diseases: typhoid fever and minor samonelloses.

Infection from *Salmonellae* is transmitted by orofaecal route through ingestion of contaminated foods or beverages. The incubation period is very short; in fact, the symptoms of the disease can present even as little as 12 hours after ingestion of the bacterium. The symptoms involve the gastrointestinal tract and are represented by abdominal pain, nausea, vomiting, high temperature, and diarrhoea.

Said disease has generally a short course and terminates with recovery, but in subjects more at risk such as children and the elderly should underestimated.

*Staphylococcus aureus* is a Gram-positive, non-sporulating bacterium, of the family of *Staphylococcacae,* comprised in the genus *Staphylococcus.* It is non-motile and does not have an evident capsule.

Said bacteria grow well in common cultures, are aerobic and facultatively anaerobic, with the possibility of use of the cytochrome system in the presence of oxygen and, otherwise, of fermentation in anaerobiosis. They present a considerable halophily given that they are, in fact, capable of developing even in environments that present a high concentration (7.5%) of NaCl (salt).

The golden pigment is characteristic of the cultures, and the name of the species (*Aureus*) derives from this pigment. The presence of the pigment depends upon numerous factors, and for recognition of the bacterium other peculiarities must be considered. The majority of adult subjects host these bacteria both at the level of the skin and in the nose and pharynx. Consequently, an infection from the species is possible at any moment.

Some bacterial strains can moreover have toxic effects and cause morbid manifestations of various types on account of certain exotoxic characteristics that they are able to produce.

The instruments of the pathogenic action of S. *aureus* are multiple. Some of these favour its multiplication, such as the aforesaid antiphagocytic action of the capsule, adesines, and protein A. Others are linked to the action of particular exotoxins and enzymes capable of damaging other cells or diffusing to the tissues neighbouring on (but also distant from) the site of the primary infection.

In supportive infections the toxins produced are cytolysins or emolysins **α** (the most widely produced), **β, γ** and **δ** and leucocidin-PV. To these there are to be added some peculiar toxins produced by specific strains of *S. aureus* such as:
epidermolytic toxin (referred to also as staphylococcal exfoliative toxin A or B). It is the cause of "staphylococcal scalded-skin syndrome" or Ritter's disease (in newborns);
enterotoxin, which causes gastroenteritis following upon a food poisoning caused by assumption of foods, rich in lipids in which a certain amount of enterotoxin has been produced. The toxic-shock toxin causes the socalled *staphylococcal toxic shock,* which is characterized by the appearance of generalized severe symptoms, erythematous manifestations, and haemodynamic-shock symptoms. The mortality is very high.

### Summary of the invention

The primary object of the invention is to provide a method of physical treatment that is able to abate effectively the microbiological charge of the outer surface of cased meat-based salumi products, whether entire or in portions, raw or cooked.

According to the invention, the above object is achieved thanks to the process as defined in its main features in Claim 1, and in its secondary features in the subsequent subordinate claims.

The treatment of sanitation of the surface of the salumi products forming the subject of the present invention uses exclusively the temperature factor and is based upon the application of "low" and "high" temperatures and upon the rapidity of the thermal excursion in successive time intervals, for programmed intensities, and for given periods of application. Following upon said application and alternation, microbial cells (*Listeria spp., Salmonella spp, E*. *coli* and *S. aureus*), which had been grown experimentally on the surface of the product and were present in amounts higher than 1 000 ufc/g (units forming a colony per gram), were devitalized. The treatment consists in three successive steps, referred to respectively as "cold-pretreatment step", "hot-treatment step", and "cooling step".

Proper application of the treatment moreover enables preservation of the physical characteristics of the product treated, without causing important modifications and alterations of the characteristics of colour, composition, and general appearance of the surface and of the underlying product, and without causing damage either to the external appearance or to the organoleptic characteristics and intrinsic quality of the product.

These temperatures at the surface of the product must be reached in a time comprised between 25 and 120 seconds from start of treatment in order to reduce the possibility of the micro-organisms present on the surface of the product having the time to "adapt" to the high temperatures and in order to increase the effect of the final treatment temperatures. The intensity of the surface treatment in terms of heat supplied on the surface in relation to the time of application varies on the basis of the type of the product undergoing treatment.

For some salumi products, the treatment cycle can be repeated for up to three times, within a maximum time from start to end of the three treatment cycles of 24 hours.

### Detailed description of the invention

The process according to the invention will now be described in greater detail with reference to the annexed drawing, which shows purely by way of nonlimiting example, in the form of a flowchart, the three successive steps of the surface thermal treatment.

Step 1 consists in a cold pretreatment, with fast application of a cooling temperature typically comprised between approximately 0 and 2°C, applied for a time sufficiently long as to guarantee that the surface of the product, for a maximum depth of 2 mm, reaches these values, in a tunnel or in a refrigerator with forced recirculation of cold air, so as to limit to a minimum the period of compensation of the temperature of the product with the temperature of the environment. Particularly suitable for the purpose are commercially available liquid-nitrogen refrigeration motors for maintaining the temperature of the recirculating air. It is emphasized in particular how no part of the product is subject to freezing in this step.

The preferred duration of this step is comprised between 25 and 120 minutes, according to the type of product.

In step 2, the surface of the product is subjected to a rapid heating to temperatures typically comprised between approximately 72°C and 80°C. The rapidity of heating is a synergistic factor at the high temperatures that are reached to obtain a better effect on the inactivation of the undesirable micro-organisms, and is obtained through the use of infrared (IR) heating lamps having the characteristics described hereinafter. The intensity of the surface treatment in terms of heat supplied on the surface in relation to the time of application varies according to the type and consistency of the product undergoing treatment.

The preferred duration of this step is comprised between approximately 5 and 90 seconds per square centimetre of the surface of the product, according to the type of product.

Infrared radiation is chosen in so far as it constitutes one of the best methods of transmission of heat. The heat is propagated by radiation when the thermal energy is transmitted from a hot body to a cold body by means of electromagnetic waves referred to as infrared. Irradiated energy travels at the speed of light (???3 x 10⁸ m/s) and has a behaviour similar to that of light radiation. When the infrared radiation encounters a body there can be refraction, reflection, absorption, and diffusion, according to the nature of the material irradiated, the quality of its surface, and the wavelength of the radiation. This can be more or less suitable for being absorbed, but it has been shown that wavelengths comprised between 2 and 4 µm (medium waves) have the highest power of penetration in almost all substances.

Infrared rays are notoriously electromagnetic waves, which have a wavelength comprised between 7 600 and 150 000 Å. They are called "infrared" owing to their closeness to the colour red of the spectrum of visible light. Infrared rays are rays that form part of the light to which our body is exposed every day (like, for example, ultraviolet rays). They represent approximately 50% of the rays emitted by the Sun and for this reason are also called calorific rays. They were discovered more than 200 years ago by William Herschel, one of the most famous astronomists of the eighteenth century. Their discovery has opened new frontiers in astronomy, but also in the infinite applications of electronics (e.g., remote control). After two centuries, the science of well-being has discovered the considerable benefits of use of infrared radiation in the aesthetic and therapeutic field (infrared-therapy), exploiting the biological effects produced by irradiation of tissues.

Infrared (IR) radiation is electromagnetic radiation with a wavelength longer than that of the visible light, but shorter than that of radio waves. The name means "below red" (from the latin *infra,* "below"), because red is the visible colour with the lowest frequency. Infrared radiation has a wavelength comprised between 700 nm and 1 mm.

Infrared is frequently divided into near infrared (NIR, 0,7-5 µm), medium or intermediate infrared (MIR or IIR, 5-30 µm), and far infrared (FIR, 30-1000 µm). This division is not very precise, but has merely the purpose of giving a rough idea of the wavelengths involved. In fact, the simple name of infrared radiation comprises a very wide spectrum of wavelengths, ranging over three orders of magnitude, within which the radiation presents a wide variety of behaviours that are frequently very different. In the wavelengths adjacent to visible up to a couple of microns, the associated phenomena are basically the same as those of visible light. From 2 µm to 30 µm the behaviour of materials starts to differ; for example, normal glass is opaque, as likewise many gases, so that said wavelengths are absorbed by the Earth's atmosphere and are hence absent from the solar spectrum. Instead, many materials that to our eyes appear perfectly opaque, are more or less transparent at these wavelength. For example, silicon and germanium that to our eyes have an opaque appearance, at these wavelengths are perfectly transparent so much so that they are used to produce lenses. Likewise, many synthetic plastic materials have a good transparency at these radiations. At higher wavelengths there are phenomena that are progressively similar to those of radio waves.

Infrared radiation is frequently linked to heat, because the objects at normal everyday temperatures, or higher temperatures, spontaneously emit radiation of this type, mostly concentrated in the medium infrared.

The radiant lamp preferentially used in the present invention is a 1500-W, 230-V tubular quartz radiant element that emits radiation in the medium-wave band (1200-3000 nm), with an emission spectrum that has a peak at 2300 nm.

The IR element is fixed to an aluminium paraboloid with high reflecting power and is suited to operation in a suspended horizontal position.

The technical characteristics are the following:

| | |
|---|---|
| Power | 1500 to 3500 W |
| Supply | 230 V |
| Positioning | Horizontal and vertical |
| Treatment times per cm² of surface of product | 5''-90'' |

Step 3 consists in a second application of low temperatures to provide a final cooling.

After hot treatment via IR and after having obtained thermal excursion even up to 80°C of the surface part of the product undergoing treatment, this final cooling takes place at a temperature comprised between 1°C and 4°C in a tunnel or in a forced-air cell. The duration of this final step may be typically comprised between 30 and 300 minutes.

The process according to the invention can be repeated for up to three cycles, within a maximum time from start of the first cycle to end of the last cycle of approximately 24 hours.

Each of the steps of pre-cooling, hot treatment, and final cooling is typically carried out by reaching the respective treatment temperatures in a time comprised between approximately 25 and 120 seconds.

### Effects of the invention

Experimental tests conducted by the present applicant have made it possible to ascertain the effectiveness of the process according to the invention.

The experimental tests were conducted at the test, research, and development laboratory of Biraghi S.p.A. The laboratory is enrolled to the Register of highly qualified laboratories of the Italian Ministry of University and Research (MUR).

The results obtained regarding sanitation of the surface of the cased salumi products, for the various types of bacteria considered, inoculated on the surface of the products, and developed at controlled temperatures, before and after treatment, are indicated in the table below.

| **Micro-organism** | **Log of reduction after treatment** | **Method** |
|---|---|---|
| *E. coli* / *g* | 3 | AFNOR N° 3M 01/8-06-2001 |
| *S. aureus* / *g* | 3 | UNI 10984-2 |
| *Salmonella spp.* | 2 | EN/ISO 6579 |
| *L. monocytogenes* / *g* | 3 | ISO 11290-2 |
| *L. monocytogenes* / *25 g* | Absent | ISO 11290-1 |

There was no evidence of significant differences in the product before and after the treatment of sanitation according to the invention, either from the chemico-physical standpoint or from the organoleptic standpoint.

Of course, without prejudice to the principle of the invention, the details of the process may vary with respect to what has been described herein purely by way of example, without thereby departing from the scope of the present invention as defined in the ensuing claims.

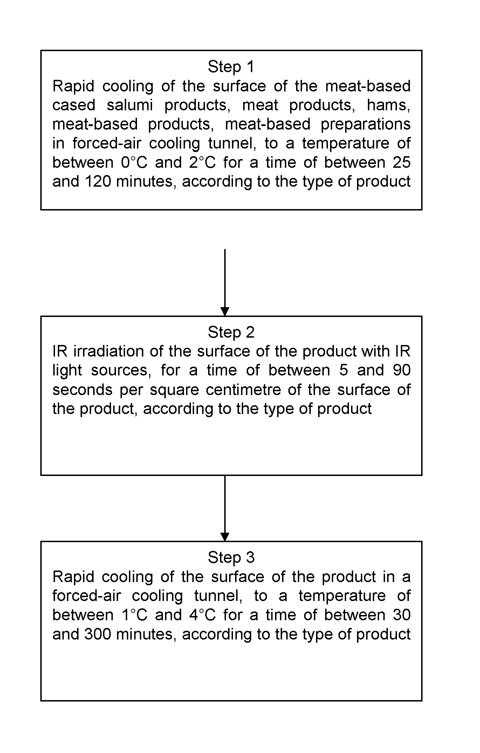

## Claims

1. A process for abating the microbiological charge of the outer surface of cased meat-based salumi products, whether entire or in portions, raw or cooked, **characterized in that** it consists in the following succession of steps:
- rapid pre-cooling to a temperature comprised between approximately 0°C and 2°C;
- hot treatment by means of rapid heating to a temperature comprised between approximately 72°C and 80°C per square centimetre of the surface of the product, according to its type; and
- rapid final cooling to a temperature comprised between approximately 1°C and 4°C.

2. The process according to Claim 1, **characterized in that** the step of pre-cooling is implemented for a duration comprised between approximately 25 and 120 minutes.

3. The process according to Claim 1 or Claim 2, **characterized in that** the hot-treatment step is implemented for a duration comprised between approximately 5 and 90 seconds.

4. The process according to Claim 1 or Claim 2 or Claim 3, **characterized in that** the step of final cooling is implemented for a duration comprised between approximately 30 and 300 minutes.

5. The process according to Claim 1, **characterized in that** the hot-treatment step is implemented by applying infrared radiation.

6. The process according to Claim 5, **characterized in that** for the infrared radiation medium-wave radiant-lamp means are used.

7. The process according to Claim 1, **characterized in that** the step of pre-cooling is implemented by means of a flow of cold air.

8. The process according to Claim 7, **characterized in that** the step of pre-cooling is carried out in a forced-air cooling tunnel.

9. The process according to Claim 7, **characterized in that** the step of pre-cooling is carried out in a refrigerator with forced recirculation of cold air.

10. The process according to Claim 1, **characterized in that** the step of final cooling is implemented by means of a flow of cold air.

11. The process according to Claim 10, **characterized in that** the step of final cooling is carried out in a forced-air cooling tunnel.

12. The process according to Claim 10, **characterized in that** the step of final cooling is carried out in a refrigerator with forced recirculation of cold air.

13. The process according to one or more of the preceding claims, **characterized in that** each of the steps of pre-cooling, hot treatment, and final cooling is carried out by reaching the respective treatment temperatures in a time comprised between approximately 25 and 120 seconds.

14. The process according to one or more of the preceding claims, **characterized in that** it is repeated for up to three cycles, within a maximum time from start of the first cycle to end of the last cycle of approximately 24 hours.
